# EUROPÄISCHE PATENTANMELDUNG

(11) **EP 3 968 673 A1**
(43) Veröffentlichungstag der Anmeldung: **16.03.2022**
(21) Anmeldenummer: 21191179.7
(22) Anmeldetag: 13.08.2021
(51) Int. Cl.: H04W 4/80, H04W 4/20, H04W 4/50, G06Q 50/30, G06Q 30/02

(54) **VERFAHREN UND EINRICHTUNG ZUM BEREITSTELLEN VON INFORMATIONEN UND/ODER FUNKTIONEN**

(30) Priorität: 10.09.2020 DE 102020123637
(71) Anmelder: RTB GmbH&Co.KG, 33175 Bad Lippspringe (DE)
(72) Erfinder: Borgwerth, Bernd, 45964 Gladbeck (DE)
(74) Vertreter: Schaumburg und Partner Patentanwälte mbB

(57) **Zusammenfassung**

Ein Verfahren zum Bereitstellen von situationsabhängigen und/oder ortsabhängigen Informationen und/oder Funktionen, umfasst in einem ersten Schritt das Senden von Ankündigungs-Daten durch mindestens eine stationäre Funkbake (12). In einem weiteren Schritt werden die Ankündigungs-Daten der Funkbake (12) durch ein mobiles Benutzergerät (14) empfangen. Als nächstes werden die empfangenen Ankündigungs-Daten durch das Benutzergerät (14) verarbeitet und eine Sammeldienstsoftware (16) auf dem Benutzergerät (14) wird benachrichtigt. Daraufhin werden Service-Daten von der Funkbake (12) durch die Sammeldienstsoftware (16) auf dem Benutzergerät (14) abgefragt. Außerdem werden die empfangenen Service-Daten durch die Sammeldienstsoftware (16) geprüft und ein Benutzer (18) des Benutzergeräts (14) wird über zur Verfügung stehende Informationen und/oder Funktionen benachrichtigt.

## Beschreibung

Die Erfindung betrifft ein Verfahren und eine Einrichtung zum Bereitstellen von situationsabhängigen und/oder ortsabhängigen Informationen und/oder Funktionen.

Zunehmend werden im öffentlichen Bereich Informationen digital bereitgestellt. Beispielsweise können Verkehrsinformationen von öffentlichen Verkehrsmitteln, wie An- und Abfahrtszeiten, durch Benutzer digital abgerufen werden. Dies geschieht oft mit Hilfe von mobilen Benutzergeräten und einer passenden Anwendungssoftware, die auf dem mobilen Benutzergerät ausgeführt wird. In der Regel ist die Anwendungssoftware so ausgebildet, dass sie jeweils nur Informationen und/oder Funktionen eines einzelnen Betreibers, beispielsweise von öffentlichen Verkehrsmitteln, zur Verfügung stellt.

Darüber hinaus finden Funkbaken im öffentlichen Bereich eine zunehmende Verbreitung. Diese Funkbaken können mit den mobilen Benutzergeräten kommunizieren und werden beispielsweise eingesetzt werden um Lichtzeichenanlagen in Abhängigkeit von im Umfeld befindlichen Benutzergeräten zu steuern. Weiterhin können Lichtzeichenanlagen mit akustischen Freigabesignalen ausgestatten sein, die in Abhängigkeit von im Umfeld befindlichen Benutzergeräten ihre Lautstärke variieren. So können Benutzer mit Hilfe der Funkbaken und in Kombination mit auf Benutzergeräten ausgeführter Anwendungssoftware zusätzliche Informationen im öffentlichen Bereich nutzen. Insbesondere für Benutzer mit einer Sehbehinderung ist es so möglich, öffentliche Bereiche zu navigieren und dabei Informationen bereitgestellt zu bekommen.

Allerdings wird oft vorausgesetzt, dass auf dem Benutzergerät eine passende Anwendungssoftware installiert ist und zur Verfügung steht, um die Anwesenheit einer Funkbake in eine entsprechende Information oder Funktion zu übertragen. Das Entdecken oder Finden der entsprechenden Anwendungssoftware ist oft schwierig und zeitaufwendig, insbesondere wenn der Benutzer in einem ihm unbekannten Umfeld ist und ganz besonders wenn der Benutzer sehbehindert ist. Diese Schwierigkeit wird zusätzlich dadurch verstärkt, dass oft jede Funktion eine eigene Anwendungssoftware benötigt. Das führt dazu, dass dem Benutzer eine große Anzahl von Anwendungssoftware bekannt sein muss, um an die jeweilige Information zu gelangen.

Aufgabe der Erfindung ist es, ein einfaches Verfahren und eine Einrichtung zum Bereitstellen von situationsabhängigen und/oder ortsabhängigen Informationen und/oder Funktionen anzugeben.

Diese Aufgabe wird durch ein Verfahren mit den Merkmalen des Anspruchs 1 sowie eine Einrichtung mit den Merkmalen des Anspruchs 13 gelöst. Vorteilhafte Weiterbildungen sind in den abhängigen Ansprüchen angegeben.

Ein Verfahren zum Bereitstellen von situationsabhängigen und/oder ortsabhängigen Informationen und/oder Funktionen, umfasst in einem ersten Schritt das Senden von Ankündigungs-Daten durch mindestens eine stationäre Funkbake (Schritt a.). In einem weiteren Schritt werden die Ankündigungs-Daten der Funkbake durch ein mobiles Benutzergerät empfangen (Schritt b.). Als nächstes werden die empfangenen Ankündigungs-Daten durch das Benutzergerät verarbeitet, und eine Sammeldienstsoftware auf dem Benutzergerät wird benachrichtigt (Schritt c.). Daraufhin werden Service-Daten von der Funkbake durch die Sammeldienstsoftware auf dem Benutzergerät abgefragt (Schritt d.). Außerdem werden die empfangenen Service-Daten durch die Sammeldienstsoftware geprüft, und ein Benutzer des Benutzergeräts wird über zur Verfügung stehende Informationen und/oder Funktionen benachrichtigt (Schritt e.). Eine Funkbake ist ein Hardware-Sender, der ein drahtloses Signal ausstrahlt und der zumindest durch ein eindeutiges Kennzeichen identifizierbar ist. Eine solche Funkbake wird im vorliegenden Kontext auch als Beacon bezeichnet.

Vorteilhaft ist es, wenn abhängig von der Prüfung in Schritt e. die Funkbake einer entsprechenden Anwendungssoftware zugeordnet wird. Dadurch wird erreicht, dass der Benutzer mit Hilfe der Anwendungssoftware besonders einfach Informationen bereitgestellt bekommt.

Besonders vorteilhaft ist es, wenn die Benachrichtigung des Benutzers eine Aufforderung zum Herunterladen zumindest der Anwendungssoftware auf das Benutzergerät umfasst. So wird der Benutzer besonders einfach auf die Existenz der Anwendungssoftware hingewiesen.

Weiterhin ist es vorteilhaft, wenn die Benachrichtigung des Benutzers das Ausführen der Anwendungssoftware auf dem Benutzergerät umfasst. Dadurch wird eine besonders einfache Weiterleitung des Benutzers zu der Anwendungssoftware erreicht.

Ferner ist es vorteilhaft, wenn in Schritt d. zusätzlich oder alternativ weitere, über ein Rechnernetzwerk bereitgestellte, Service-Daten geprüft werden. Das Rechnernetzwerk kann beispielsweise das Internet sein. Dadurch wird erreicht, dass besonders aktuelle und sichere Informationen bereitgestellt werden.

Vorteilhaft ist es, wenn sich die Sammeldienstsoftware vor Schritt d. gegenüber der Funkbake und/oder gegenüber einem Rechnernetzwerk mit Hilfe eines Benutzerzertifikats authentifiziert, insbesondere mit Hilfe einer Challenge-Response-Authentifizierung. Zusätzlich kann die Laufzeit des Benutzerzertifikats beschränkt sein. Dadurch wird erreicht, dass nur berechtigten Benutzern Informationen bereitgestellt werden.

Besonders vorteilhaft ist es, wenn das Benutzerzertifikat eine Einteilung in mindestens eine Benutzergruppe umfasst. Dadurch wird erreicht, dass die Verwaltung der Berechtigungen besonders einfach ist. Eine Benutzergruppe kann beispielsweise die Benutzer umfassen, die berechtigt sind eine bestimmte Funktion der Sammeldienstsoftware zu nutzen.

Vorteilhaft ist es, wenn die Service-Daten mit Hilfe eines Zertifikats authentifiziert werden. Dadurch wird sichergestellt, dass die Service-Daten besonders sicher sind.

Vorteilhaft ist es, wenn zwischen der Funkbake und dem Benutzergerät Daten mit Hilfe von drahtlosen Signalen, insbesondere nach dem Bluetooth Protokoll oder dem Bluetooth Low Energy Protokoll, übertragen werden. Die übertragenen Daten umfassen dabei die Ankündigungs-Daten und die Service-Daten. Dadurch wird erreicht, dass die Funkbake mit einer möglichst großen Anzahl an unterschiedlichen Benutzergerätmodellen kompatibel ist.

Vorteilhaft ist es, wenn die Anwendungssoftware drahtlos mit der Funkbake kommuniziert. Damit ist sichergestellt, dass die Anwendungssoftware besonders aktuelle Informationen bereitstellt.

Besonders vorteilhaft ist es, wenn die Benachrichtigung des Benutzers mit Hilfe von haptischen und/oder akustischen Signalen des Benutzergeräts erfolgt. Außerdem ist es vorteilhaft, wenn die zumindest eine Funkbake in einem öffentlichen Verkehrsmittel installiert ist und die Anwendungssoftware geeignete Verkehrsinformationen für Benutzer des öffentlichen Verkehrsmittels mit einer Sehbehinderung umfasst. Damit ist sichergestellt, dass die bereitgestellten Informationen von einem möglichst großen Benutzerkreis wahrnehmbar sind.

Ein zweiter Aspekt der Erfindung betrifft eine Einrichtung zum Bereitstellen von situationsabhängigen und/oder ortsabhängigen Informationen und/oder Funktionen. Die Einrichtung umfasst mindestens eine stationären Funkbake und ein mobiles Benutzergerät. Die Funkbake ist so ausgebildet, dass sie Ankündigungsdaten sendet. Weiterhin ist das Benutzergerät so ausgebildet, dass es die Ankündigungsdaten empfängt, die Ankündigungsdaten verarbeitet und eine Sammeldienstsoftware auf dem Benutzergerät benachrichtigt. Die Sammeldienstsoftware fragt die Service-Daten von der Funkbake ab, prüft die Service-Daten, und benachrichtigt einen Benutzer des Benutzergeräts über zur Verfügung stehende Informationen und/oder Funktionen. Die Einrichtung kann in gleicher Weise weitergebildet werden wie das Verfahren, insbesondere mit den Merkmalen der abhängigen Ansprüche oder entsprechenden Einrichtungsmerkmalen. Die mit dieser Einrichtung erzielten technischen Vorteile stimmen mit denen überein, die im Zusammenhang mit dem Verfahren nach der Erfindung erläutert werden.

Nachfolgend werden Ausführungsbeispiele anhand von Zeichnungen beschrieben. Es zeigen:
- Fig. 1: ein Ablaufdiagramm eines Verfahrens zum Bereitstellen von situationsabhängigen und/oder ortsabhängigen Informationen und/oder Funktionen, und
- Fig. 2: eine schematische Ansicht einer Einrichtung zum Bereitstellen von situationsabhängigen und/oder ortsabhängigen Informationen und/oder Funktionen.

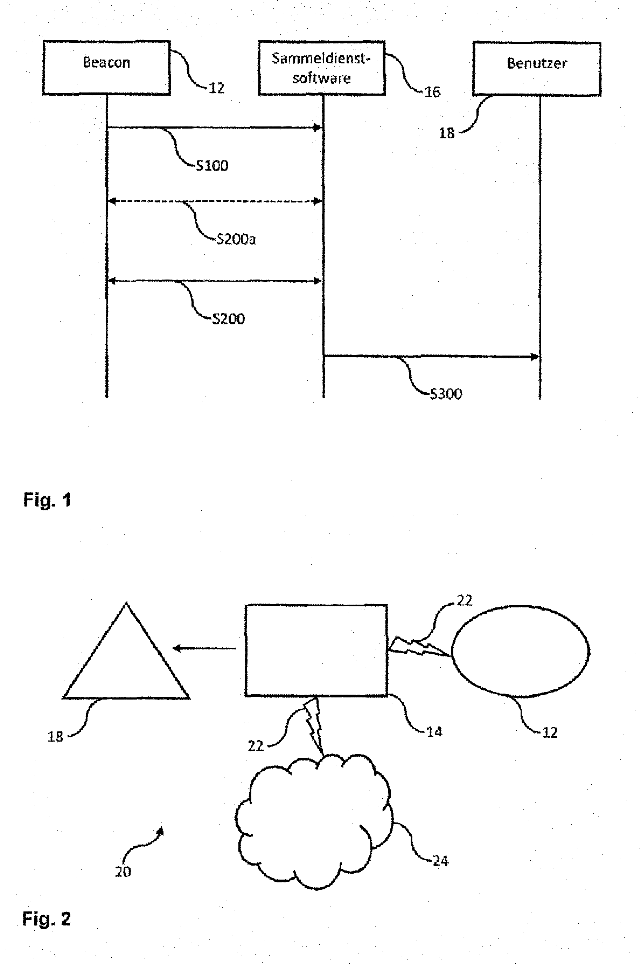

Figur 1 zeigt ein Ablaufdiagramm eines Verfahrens zum Bereitstellen von situationsabhängigen und/oder ortsabhängigen Information und/oder Funktionen. Das Verfahren stellt mit Hilfe zumindest einer Funkbake (Beacon) 12 und einer auf einem Benutzergerät 14 (vgl. Figur 2) installierten Sammeldienstsoftware 16 Informationen und/oder Funktionen für einen Benutzer 18 bereit.

Die Funkbake 12 ist in der Regel an einem Standort fest installiert und sendet in einem ersten Schritt S100 Ankündigungs-Daten aus. Die Ankündigungs-Daten umfassen insbesondere Informationen zur Identität der Funkbake 12 und/oder zum Standort der Funkbake 12. Der Standort ist in der Regel ein Ort, an dem dem Benutzer 18 eine bestimmte Information bereitgestellt werden soll. Die Ankündigungs-Daten geben die Existenz der Funkbake 12 bekannt, so dass das Benutzergerät 14, insbesondere die auf dem Benutzergerät 14 installierte Sammeldienstsoftware 16, feststellen kann, dass das Benutzergerät 14 in Reichweite der Funkbake 12 ist. Ein Betriebssystem des Benutzergeräts 14 verarbeitet die empfangenen Ankündigungs-Daten der Funkbake 12 und benachrichtigt im Hintergrund die Sammeldienstsoftware 16 des Benutzergeräts 14.

Die Sammeldienstsoftware 16 fragt dann in einem weiteren Schritt S200 Service-Daten von der Funkbake 12 ab. Diese Service-Daten umfassen weitere Informationen insbesondere zu Funktionen, die im Zusammenhang mit der Funkbake 12 zur Verfügung stehen. Alternativ oder zusätzlich können durch die Sammeldienstsoftware 16 weitere Service-Daten von einem Rechnernetzwerk abgefragt werden.

Optional wird in einem Schritt S200a vor dem Schritt S200 die Sammeldienstsoftware 16 gegenüber der Funkbake 12 und/oder gegenüber dem Rechnernetzwerk mit Hilfe eines Benutzerzertifikats authentifiziert. Diese Authentifizierung wird nach aus dem Stand der Technik bekannten Methoden vollzogen, insbesondere mit Hilfe einer Challenge-Response-Authentifizierung. Für den Fall, dass das in Schritt S200a geprüfte Benutzerzertifikat gültig ist, kann mit Schritt S200 fortgefahren werden, ansonsten können die Service-Daten nicht abgefragt werden. Dies ermöglicht eine Restriktion der Interaktion zwischen der Funkbake 12 (oder dem Rechnernetzwerk) und der Sammeldienstsoftware 16 beispielsweise für sicherheitsrelevante Funktionen und/oder zum Zweck der Monetarisierung der Interaktion. Ferner kann das Benutzerzertifikat zusätzlich einer oder mehreren Benutzergruppen zugeordnet sein. Anhand des Benutzerzertifikats können die oben beschriebenen Restriktionen für eine bestimmte Gruppe an Benutzern definiert werden.

In Schritt S300 werden dann die in Schritt S200 empfangenen Service-Daten durch die Sammeldienstsoftware 16 geprüft. Die Prüfung umfasst insbesondere die Zuordnung der Service-Daten zu einer entsprechenden Anwendungssoftware. Zusätzlich umfasst die Prüfung die Authentifizierung der Service-Daten mit Hilfe eines Zertifikats. Nur in dem Fall in dem die Prüfung des Zertifikats erfolgreich ist, können die Service-Daten weiter geprüft werden, worauf die Zuordnung erfolgt.

Die Zuordnung erfolgt jeweils zu der Anwendungssoftware, die die Service-Daten verarbeiten kann und dem Benutzer 18 weitere Informationen und/oder Funktionen zur Verfügung stellen kann. In dem Fall, in dem die entsprechende Anwendungssoftware nicht auf dem Benutzergerät 14 installiert ist, wird der Benutzer 18 in Schritt S300 auf die Installation hingewiesen beziehungsweise hierzu aufgefordert. Wenn die Anwendungssoftware bereits auf dem Benutzergerät 14 installiert ist, wird die entsprechende Anwendungssoftware durch die Sammeldienstsoftware 16 ausgeführt.

So kann mit dem Verfahren ausgehend von der Funkbake 12 dem Benutzer 18 eine Information und/oder Funktion bereitgestellt werden. Insbesondere dann, wenn sich der Benutzer 18 mit seinem Benutzergerät 14 in einer Umgebung mit mehreren Funkbaken bewegt, die jeweils eine bestimmte Anwendungssoftware voraussetzen, kann mit dem Verfahren so die jeweils passende Anwendungssoftware dem Benutzer 18 bereitgestellt werden.

Die Anwendungssoftware kann dem Benutzer 18 in Abhängigkeit von der Funkbake 12 weitere Informationen zur Verfügung stellen.

Figur 2 zeigt eine schematische Ansicht einer Einrichtung 20 zum Bereitstellen von situationsabhängigen und/oder ortsabhängigen Informationen und/oder Funktionen. Die Einrichtung 20 umfasst die Funkbake 12 sowie das Benutzergerät 14.

Das Benutzergerät 14 ist beispielsweise ein Mobiltelefon, insbesondere ein Smartphone. Alternativ kann das Benutzergerät 14 eine Smartwatch sein, oder ein Gerät mit reduziertem Funktionsumfang, wie beispielsweise ein Anhänger, der lediglich vibrieren kann.

Wenn der Benutzer 18, wie in Figur 2 gezeigt, mit dem Benutzergerät 14 in der Nähe der Funkbake 12 ist, erfasst das Benutzergerät 14 die ausgesendeten Signale der Funkbake 12. Die Reichweite der Funkbake 12 ist maßgeblich abhängig von der Stärke des ausgesendeten Signals. Die Signale der Funkbake 12, die beispielsweise die Ankündigungs-Daten und die Service-Daten zur Kommunikation mit dem Benutzergerät 14 umfassen, werden beispielsweise nach dem Bluetooth-Standard übertragen. Drahtlose Verbindungen sind in Figur 2 mit dem Bezugszeichen 22 bezeichnet. Alternativ kann die Übertragung über weitere sogenannte drahtlose Übertragungsprotokolle stattfinden, beispielsweise mit Hilfe eines Bluetooth Low Energy Signals, eines Near Field Communication Signals, oder eines anderen aus dem Stand der Technik bekannten drahtlosen lokalen Funknetzes.

Zusätzlich kann das Benutzergerät mit dem Rechnernetzwerk 24 kommunizieren. Diese Kommunikation kann beispielsweise über ein Mobilfunknetz, oder ein drahtloses lokales Funknetz, z.B. WLAN erfolgen.

Um Informationen und/oder Funktionen im Zusammenhang mit der Funkbake 12 zu erhalten, interagiert der Benutzer 18 mit dem Benutzergerät 14, insbesondere dann, wenn der Benutzer 18 benachrichtigt wurde.

Die Funkbake 12 kann beispielsweise in einem öffentlichen Verkehrsmittel stationär angeordnet sein. Mit Hilfe des Verfahrens kann der Benutzer 18 auf die Anwendungssoftware des Betreibers des öffentlichen Verkehrsmittels hingewiesen werden. Insbesondere für einen Benutzer mit Sehbehinderung ist die akustische und/oder haptische Benachrichtigung besonders hilfreich. Mit Hilfe der Anwendungssoftware und in Kombination mit der Funkbake 12 kann der Benutzer 18 dann beispielsweise Verkehrsinformationen zu dem Verkehrsmittel erhalten, in dem die Funkbake 12 angeordnet ist und in dessen Umgebung sich das Benutzergerät 14 befindet. Dieser Ablauf ermöglichen es, dass insbesondere dem Benutzer mit Sehbehinderung Informationen über das Verkehrsmittel bereitgestellt werden.

### Bezugszeichenliste

- 12: Funkbake
- 14: Benutzergerät
- 16: Sammeldienstsoftware
- 18: Benutzer
- 20: Einrichtung
- 22: Drahtlose Verbindung
- 24: Rechnernetzwerk

## Patentansprüche

1. Verfahren zum Bereitstellen von situationsabhängigen und/oder ortsabhängigen Informationen und/oder Funktionen, mit folgenden Schritten:
a. Senden von Ankündigungs-Daten durch mindestens eine stationäre Funkbake (12),
b. Empfangen der Ankündigungs-Daten der Funkbake (12) durch ein mobiles Benutzergerät (14),
c. Verarbeiten der empfangenen Ankündigungs-Daten durch das Benutzergerät (14) und Benachrichtigen einer Sammeldienstsoftware (16) auf dem Benutzergerät (14),
d. Abfragen von Service-Daten von der Funkbake (12) durch die Sammeldienstsoftware (16) auf dem Benutzergerät (14),
e. Prüfen der empfangenen Service-Daten durch die Sammeldienstsoftware (16) und Benachrichtigen eines Benutzers (18) des Benutzergeräts (14) über zur Verfügung stehende Informationen und/oder Funktionen.

2. Verfahren nach Anspruch 1, bei dem abhängig von der Prüfung in Schritt e. die Funkbake (12) einer entsprechenden Anwendungssoftware zugeordnet wird.

3. Verfahren nach Anspruch 2, bei dem die Benachrichtigung des Benutzers (18) eine Aufforderung zum Herunterladen zumindest der Anwendungssoftware auf das Benutzergerät (14) umfasst.

4. Verfahren nach einem der vorhergehenden Ansprüche 1 oder 2, bei dem die Benachrichtigung des Benutzers (18) das Ausführen der Anwendungssoftware auf dem Benutzergerät (14) umfasst.

5. Verfahren nach einem der vorhergehenden Ansprüche, bei dem in Schritt d. zusätzlich oder alternativ weitere, über ein Rechnernetzwerk (24) bereitgestellte, Service-Daten geprüft werden.

6. Verfahren nach einem der vorhergehenden Ansprüche, bei dem sich die Sammeldienstsoftware (16) vor Schritt d. gegenüber der Funkbake (12) und/oder gegenüber einem Rechnernetzwerk (24) mit Hilfe eines Benutzerzertifikats authentifiziert, insbesondere mit Hilfe einer Challenge-Response-Authentifizierung.

7. Verfahren nach Anspruch 6, bei dem das Benutzerzertifikat eine Einteilung in mindestens eine Benutzergruppe umfasst.

8. Verfahren nach einem der vorhergehenden Ansprüche, bei dem die Service-Daten mit Hilfe eines Zertifikats authentifiziert werden.

9. Verfahren nach einem der vorhergehenden Ansprüche, bei dem zwischen der Funkbake (12) und dem Benutzergerät (14) Daten mit Hilfe von drahtlosen Signalen, insbesondere nach dem Bluetooth Protokoll oder dem Bluetooth Low Energy Protokoll, übertragen werden.

10. Verfahren nach einem der vorhergehenden Ansprüche 2 bis 9, bei dem die Anwendungssoftware drahtlos mit der Funkbake (12) kommuniziert.

11. Verfahren nach einem der vorhergehenden Ansprüche, bei dem die Benachrichtigung des Benutzers (18) mit Hilfe von haptischen und/oder akustischen Signalen des Benutzergeräts (14) erfolgt.

12. Verfahren nach einem der vorhergehenden Ansprüche 2 bis 11, bei dem die zumindest eine Funkbake (12) in einem öffentlichen Verkehrsmittel installiert ist und die Anwendungssoftware geeignete Verkehrsinformationen für Benutzer (18) des öffentlichen Verkehrsmittels mit einer Sehbehinderung umfasst.

13. Einrichtung (20) zum Bereitstellen von situationsabhängigen und/oder ortsabhängigen Informationen und/oder Funktionen, umfassend:
mindestens eine stationäre Funkbake (12), und
ein mobiles Benutzergerät (14),
wobei die Funkbanke (12) so ausgebildet ist, dass sie Ankündigungsdaten sendet, und
das Benutzergerät (12) so ausgebildet ist, dass es:
die Ankündigungsdaten empfängt,
die Ankündigungsdaten verarbeitet und eine Sammeldienstsoftware (16) auf dem Benutzergerät (14) benachrichtigt,
wobei die Sammeldienstsoftware (16) Service-Daten von der Funkbake (12) abfragt, die Service-Daten prüft, und einen Benutzer (18) des Benutzergeräts (14) über zur Verfügung stehende Informationen und/oder Funktionen benachrichtigt.
